(19)

Europäisches
Patentamt
European
Patent Office
Office européen
des brevets

(11) **EP 3 486 612 B1**

(12) **EUROPEAN PATENT SPECIFICATION**

(45) Date of publication and mention
of the grant of the patent:
**01.07.2020 Bulletin 2020/27**

(51) Int Cl.:
*G01C 21/20* (2006.01)     *G01C 21/34* (2006.01)

(21) Application number: **17202490.3**

(22) Date of filing: **20.11.2017**

(54) **METHOD FOR GENERATING A TRAJECTORY**

VERFAHREN ZUR ERZEUGUNG EINER BAHNFÜHRUNG

PROCÉDÉ DE GÉNÉRATION D'UNE TRAJECTOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2019 Bulletin 2019/21**

(73) Proprietor: **Robert Bosch GmbH
70442 Stuttgart (DE)**

(72) Inventors:
• **PHAN, Huu-Thanh
64283 Darmstadt (DE)**
• **DE VRIES, Jorik
5623 MP Eindhoven (NL)**

(56) References cited:
• **ALESSANDRO GASPARETTO ET AL: "Trajectory
Planning in Robotics", MATHEMATICS IN
COMPUTER SCIENCE, SP BIRKHÃ USER
VERLAG BASEL, BASEL, vol. 6, no. 3, 30 August
2012 (2012-08-30) , pages 269-279, XP035125437,
ISSN: 1661-8289, DOI:
10.1007/S11786-012-0123-8**
• **Bill Casselman: "From Bézier to Bernstein",
Feature Column from the American Mathematical
Society, 1 November 2008 (2008-11-01),
XP055474172, Retrieved from the Internet:
URL:http://www.ams.org/publicoutreach/feat
ure-column/fcarc-bezier [retrieved on
2018-05-09]**
• **BOEHM W ET AL: "ON DE CASTELJAU'S
ALGORITHM", COMPUTER AIDED GEOMETRIC
DESIGN, XX, XX, vol. 16, no. 7, 1 August 1999
(1999-08-01) , pages 587-605, XP001180042, DOI:
10.1016/S0167-8396(99)00023-0**
• **Christian Igel and Michael Husken: "Improving
the Rprop Learning Algorithm", Proceedings of
the Second ICSC International Symposium on
Neural Computation, 1 January 2000
(2000-01-01), pages 115-121, XP055474168,
Retrieved from the Internet:
URL:http://citeseerx.ist.psu.edu/viewdoc/d
ownload?doi=10.1.1.17.3899&rep=rep1&type=p
df [retrieved on 2018-05-06]**

**Description**

The present invention relates to a method for generating a trajectory from a starting point to a target point based on at least one predetermined constraint, which the trajectory is required to satisfy. Furthermore, the invention relates to a processing unit and a control unit for a displacement device configured to carry out the method according to the invention. The invention relates to the technical field of displacement devices and of generating trajectories by means of a control unit for moving the displacement device and/or a transport system, in particular of planar displacement systems.

Background of the Invention

Displacement devices typically use trajectory generation algorithms to provide trajectories for moving objects or parts of the displacement device from the starting point to a target point.

The productivity of the transport system can be increased by decreasing the time of the transportations. However, a path for a trajectory being considered as optimal does not necessarily have to result in a time-optimal trajectory. Instead, a different path or trajectory requiring a longer travel time and/or distance may be preferred due to a limited amount of acceleration and/or jerk occurring in the displacement system as compared to a trajectory offering shorter travelling time. Regularly, in order to obtain such a time-optimal solution, different paths and/or trajectories have to be compared to retrieve the optimal solution.

Some implementations are known in prior art, which are capable of calculating such trajectories, as disclosed for instance in M. Zucker, N. Ratli, A. D. Dragan, M. Pivtoraiko, M. Klingen-smith, C. M. Dellin, J. A. Bagnell and S. S.

Srinivasa: "Chomp: Covariant Hamiltonian optimization for motion planning," The International Journal of Robotics Research, 2013; X. Lu, Y. Zhao, C. Wang and M. Tomizuka: "Trajectory planning for robot manipulators considering kinematic constraints using probabilistic roadmap approach," Journal of Dynamic Systems, Measurement, and Control, no. 130, 2017; and in documents US20160207658A; US20170179806A; and US9685849B2.

However, these trajectory generation algorithms demand a high computational effort and, thus, require a large computing power and/or a long computation time. This makes their implementation typically difficult, slow and/or expensive.

Therefore, it is the objective technical problem of the invention to provide a method for generating a trajectory requiring less computational effort and by this to facilitate its implementation and/or to reduce the hardware requirements.

ALESSANDRO GASPARETTO ET AL: "Trajectory Planning Robotics", MATHEMATICS IN COMPUTER SCIENCE; SP BIRKHA USER VERLAG BASEL, BASEL, discloses a method for trajectory planning by inputting a geometric path, kinematic and dynamic constraints and outputting a trajectory of joints, by specifying the path using a limited number of via-points and giving the solution by spline interpolation, expressing the trajectories by means of cubic splines.

Bill Casselmann: "From Bezier to Bernstein", Feature Column from the American Mathematical Society, discloses the usage of Bezier curves in computer graphics.

BOEHM ET AL: "ON DE CASTELJAUS ALGORITHM", COMPUTER AIDED GEOMETRIC DESIGN, discloses the optimization of a design curve by varying the angle of the tangent of the spline.

Christian Igel and Michael Husken: "Improving the Rprop Learning Algorithm"; Proceedings of the Second ICSC International Symposium on Neural Computation, discloses that an optimization algorithm uses an RPROP heuristic.

Disclosure of the invention

According to the invention, a method, a processing unit, a control unit, a displacement device, a computer program and a machine readable data storage medium having the features of the respective independent claim are disclosed. Preferred embodiments are subject-matter of the dependent claims and the following description.

In one aspect the invention relates to a method for generating a trajectory from a starting point to a target point according to claim 1.

In another aspect the invention relates to a processing unit configured to carry out a method according to the invention, and to a control unit for a displacement device comprising such a processing unit.

In another aspect the invention relates to a displacement device comprising a control unit according to the invention. The displacement device is preferably configured as a transport system, most preferably as a planar motion system.

A trajectory is to be understood as a path along which for instance a movement is to be carried out, for example by a displacement device and/or a tool. The waypoints may at least partially define the initial trajectory. The at least one constraint may be predetermined and may define one or more requirements, which the trajectory has to fulfil, to allow a movement along the trajectory satisfying predetermined requirements. Optionally, an initial velocity and/or an initial acceleration and/or an initial jerk may be predetermined and/or given. Determining the at least one constraint may include retrieving the at least one constraint, for instance from a user input and/or from a data storage. Preferably, the at least one constraint comprises a maximum velocity and/or a maximum acceleration and/or a maximum jerk allowed when traveling along the trajectory. Preferably, the at least one constraint may also comprise information about possible obstacles which need to be considered when generating the trajectory. Most preferably, the trajectory satisfies all requirements set out by the constraint, and in particular satisfies the maximum velocity and/or the maximum acceleration and/or the maximum jerk and prevents a collision with all obstacles defined by the at least one constraint.

A spline is a mathematical function or curve, which is built-up from one or more polynomial functions. In particular a spline can comprise several spline segments, wherein according to the present invention preferably each waypoint and/or each traveling time interval is associated with one spline defined by a polynomial function segment and wherein all these spline segments together form a spline. A spline of n-th order comprises only spline segments, which are defined of a polynomial of maximum n-th order. Furthermore, requirements may be defined, in particular at the contact points at which adjacent spline segments are meeting each other, according to which the spline shall be continuously differentiable at least (n-1) times. In particular, a spline segment is defined by a coordinate, which is according to the present invention the at least one coordinate of the waypoint, a spline parameter and the distance between adjacent waypoints. In particular, the coordinate of the spline, i.e. the waypoint, is preferably defined by a pair of coordinates in two-dimensional space, for instance by an x-coordinate and a y-coordinate, which allows generating a two-dimensional trajectory in the two-dimensional space. For generating a spline and/or trajectory in a three-dimensional space, the waypoint may be defined by a triple of coordinates, such as an x-, a y- and a z-coordinate. The whole spline is defined by the concatenation of the individual spline segments.

The trajectory is then formed by sampling the splines to obtain several sample points and by interpolating the several sample points to achieve a continuous trajectory.

Optimizing the trajectory to a time-optimal trajectory means that the spline parameters of the splines forming the trajectory are varied and the trajectory is compared to the previous trajectory. If the variation of the trajectory results in an improved trajectory, i.e. a more time-optimal trajectory and/or a trajectory being better suited with regard to the constraint, the varied trajectory is taken over and possibly further optimized.

The invention provides the advantage that the computational effort for generating and/or optimizing the trajectory can be reduced, because the number of variables that needs to be optimized and/or varied is greatly reduced when compared to conventional algorithms. Instead of conventional methods, the invention merely requires varying and/or optimizing the spline parameters, recalculating the splines on the basis of the varied spline parameters and rebuilding the trajectory on the basis of the varied splines. Therefore, the number of variables to be varied is greatly limited and, thus, the computational effort for the optimization of the trajectory is significantly reduced.

Consequently, the invention provides the advantage, that the generation of the trajectory can be carried out on machines having moderate computational power and/or that the generation of the trajectory can be carried in a short amount of time, thus, speeding up the generation process. Alternatively or additionally, the invention may allow a large number of trajectory generations to be carried out in parallel by one control unit or machine.

Furthermore, albeit the reduction in computational effort, the invention still allows constraints, in particular higher order constraints, such as a maximum velocity and/or a maximum acceleration and/or a maximum jerk, to be considered and by this to achieve a smooth trajectory minimizing the mechanical strain to the displacement system.

Preferably, the spline is a quintic Bezier spline. This provides the advantage that a particularly smooth trajectory can be created with limited computational effort. This provides further the advantage that convex hull properties (CHP) can be used to increase the efficiency when checking for collisions of the trajectory with obstacles. An initial velocity and/or acceleration and/or jerk may be specified by using a quintic Bezier spline.

According to the invention, the at least one constraint comprises a maximum velocity and/or a maximum acceleration and/or a maximum jerk occurring when traveling along the trajectory and/or the at least one constraint comprises alternatively or additionally a position of at least one obstacle, wherein the method, preferably in step c) and/or step d), comprises checking for a collision of the initial path and/or the trajectory with the position of the at least one obstacle. This allows an optimization or generation of the trajectory ensuring that when traveling along the trajectory, collisions with obstacles defined by the constraints are avoided.

According to the invention, varying the spline parameters includes varying at least one of the splines in its position and/or in an angle of a tangent, wherein the tangent defines a direction in which the spline extends at the position of respective waypoint. This allows a facilitated variation and/or optimization of the spline and, thus, of the trajectory with little computational effort. In particular, such an optimization of the trajectory requires only few variables to be modified or varied.

According to the invention, varying the spline parameters includes a stepwise variation of the spline parameters in an iterative manner. This allows a facilitated implementation into a computer program and a step wise optimization of the trajectory. More preferably, a step size of the stepwise variation of the tangent is increased if the preceding variation improved the trajectory and/or wherein a step direction is reversed and the step size is reduced if the preceding variation impaired the trajectory. This allows a stepwise approach and/or a convergence to the time-optimal trajectory.

Preferably, the optimizing of the trajectory to a time-optimal trajectory is performed by a RPROP optimization heuristic. The RPROP optimization heuristics allow a good efficiency and are simple in their implementation and use. Alternatively, a different gradient free optimization approach may be used, such like a Neader-Mead approach.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention, as defined by the appended claims.

In the drawings:

Figure 1 shows in a flow diagram an exemplary procedure of a method for generating a trajectory according to a preferred embodiment.

Figure 2 schematically shows a hardware- and software layout of a control unit or a processing unit according a preferred embodiment

Figure 3 exemplarily shows in diagram several different trajectories.

Figure 4 schematically depicts an exemplary time-optimized trajectory together with the initial waypoints and several defined sample points.

Detailed description of the drawings

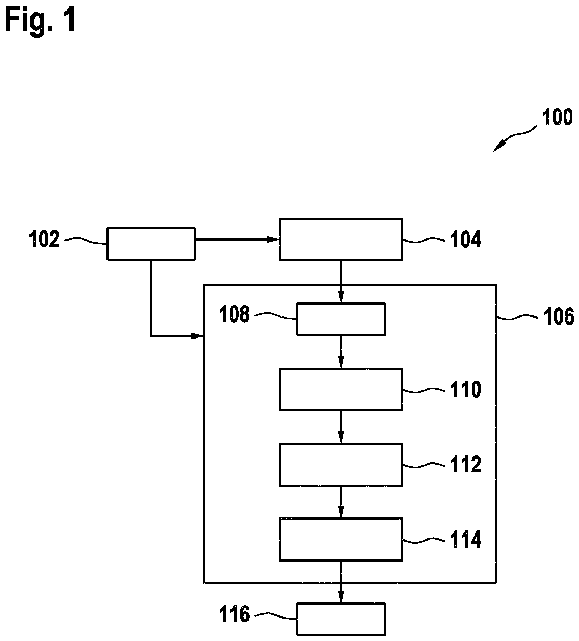

Figure 1 shows in an exemplary flow diagram a procedure of a method for generating a trajectory according to a preferred embodiment. In step 102, at least one constraint is provided for generation of a set of initial waypoints (step 104) and also for the subsequent optimization of the trajectory (106). The at least one constraint for instance comprises one or more obstacles, i.e. information about the at least one obstacle, such as their coordinates in a space, in which the trajectory shall be generated. Furthermore, the constraint may optionally also comprise a maximum velocity and/or a maximum acceleration and/or a maximum jerk. The at least one constraint is required to be satisfied by the generated and/or optimized trajectory. That the at least one constraint is determined means for example that the predetermined constraint/s may be sent to the respective calculation module carrying out steps 104 and/or 106 or be retrieved by the respective calculation module.

The generation of a set of initial waypoints in step 104 serves the purpose of generating an initial geometric path from the predetermined starting point to the predetermined target point and may be carried out by a geometric path planner module.

On the basis of the set of initial waypoints, which is handed over to a trajectory optimization module, the trajectory is optimized in step 106. Having retrieved the initial geometric path, i.e. the set of initial waypoints (step 108), a spline is generated by extending through the set of initial waypoints (step 110). Between each two of these waypoints, one spline extends, such that the splines are connected at the waypoints. This may occur for instance by means of a path generation module, wherein the spline may be generated for example as a quintic Bezier spline. The spline is sampled and a set of sample points is defined, which are located on the spline and preferably are spaced apart at a smaller distance than the distance between two adjacent waypoints. Afterwards, the sample points are interpolated to retrieve a trajectory continuously extending from the starting point to the target point (step 112). Afterwards, in step 114 the spline parameters are varied, preferably according to a resilient backpropagation (RPROP) optimization heuristics and a new iteration is started, including again the steps 110, 112 and 114, i.e. generating new splines based on the varied spline parameters, fitting a time-optimal trajectory, comparing it to the previous trajectory and eventually varying again the spline parameters. This iteration is repeated until either an optimal or time-optimal trajectory is calculated, i.e. that any further variation of the spline parameters leads to a less optimal trajectory, or until a predetermined planning time has elapsed. Finally, the optimized trajectory is output in step 116.

According to this preferred embodiment using a quintic Bezier spline, the trajectory can be optimized by varying only three parameters. In other words, each initial waypoint calculated by the geometric path planner in step 104 has three optimization parameters, which is the x-coordinate, the y-coordinate and the tangent of the spline at the coordinate of the respective sample points. Therefore, the calculation effort is greatly reduced as compared to conventional methods requiring a variation or optimization of a much larger number of variables. Shifting the position or coordinates of the sample points, possibly leads to an increase or a reduction of the path length. However, longer paths not necessarily need to be detrimental, since a longer path length might lead to a smoother path which possibly can be travelled with a higher speed while still satisfying certain constraints regarding a maximum acceleration and/or jerk.

In a preferred embodiment, the method may use RPROP optimization heuristics, which are conventionally known in prior art, according to which each criteria is initially changed by a predetermined step size. For instance, if an improvement is observed due to a previous change or variation, the step size is increased for example by a factor of 1,2, if the result is worse, the optimization or variation direction is reversed and the step size is set for example to 0,5. The step size is the size of a variation step when varying the position of the sample points. This can be repeated until either the execution time is exceeded or the minimum step size is reached for each sample point.

Although good results can be achieved by means of RPROP optimization heuristics, also other optimization algorithms or systems may be used instead.

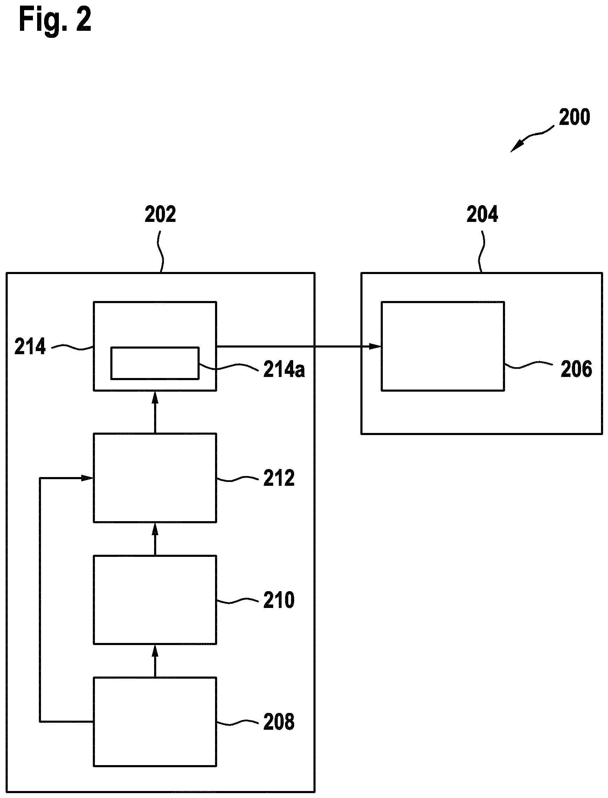

Figure 2 schematically shows a hardware- and software layout 200 of a control unit or a processing unit according a preferred embodiment. The layout 200 shows a software module 202, which may be operated on a control unit for controlling a connected physical system 204, such as a displacement device or a transportation system comprising a mover 206.

The software module 202 includes a system controller 208, which determines and/or provides the start position and/or the target position and/or the at least one constraint, such as positions of obstacles and/or a maximum velocity and/or a maximum acceleration and/or a maximum jerk. The system controller provides the start position and/or the target position and/or the at least one constraint to the geometric path planner 210 for generating a set of initial waypoints and also to the trajectory optimization module 212 as an input for the optimization of a trajectory satisfying the at least one constraint based on the set of waypoints provided by the geometric path planner 210.

After completing the optimization of the trajectory, the trajectory is output as splines to a set point generator 214a within a motion controller system 214, which in turn controls the movement of the mover 206.

In the following, an exemplary program code is shown, which may carry out an optimization of the trajectory to a time-optimal trajectory. The algorithm is adjusted to finding the optimal path parameters $\Theta^*$, wherein $\Theta^*$ denotes a vector of optimized coordinates of the sample points.

The initial path parameter is denoted as $\Theta_{ini}$, the initial step size as $\Delta\Theta_{ini}$, the minimal step size $\Delta\Theta_{min}$, the maximum number of iterations $N_{max}$ and the at least one constraint as a vector **C**, which comprise at least a list of obstacles, such as their coordinates.

After finding the optimal trajectory, the optimized path parameter $\Theta^*$ and the optimal trajectory **q\*(t)**, which is a vector $\mathbf{q^*(t)} := \begin{pmatrix} x(t) \\ y(t) \end{pmatrix}$ of the time-dependent coordinates x(t) and y(t) and represents the trajectory as a function time t, are provided as an output. The parameter **Q** represents a list of the sample points on the spline, wherein the list of sample points may be written as $\mathbf{Q} = [q_0 \, q_1 ... q_{Ns}]$. Further, the parameter **h** denotes the vector of traveling times between the respective, adjacent waypoints and T the total traveling time along the whole trajectory. The lowered indices "ini" stand for "initial", which means that this parameter is initially generated before the iterative optimization or provided as an input, "mod" stands for "modified" parameters, which are varied or changed by the program code in the course of optimization, and the lowered index "i" denotes a single component of a vector-sized parameter, such as its component relating to one specific waypoint out of the vector of waypoints. The superscript index "*" denotes the (so far) optimized respective parameter.

**Initialization:**

$$\Theta^* := \Theta_{ini}; \quad \Delta\Theta := \Theta_{ini};$$

$$Q_{ini} := \text{sampleSmoothPath}(\Theta_{ini});$$

$$h_{ini} := \text{determineTimeIntervals}(Q_{ini});$$

$$\mathrm{T}^* := \sum_{k=1}^{N_s} h_k \qquad \text{// calculate total travel time}$$

**Repeat**

    **for all** $i = 1:1:3(N_w - 2)$ **do**

$$\Theta_{mod} := \Theta^*;$$

$$\Theta_{mod,i} := \Theta_{mod,i} + \Delta\Theta_i$$

    **if (** $collision(\Theta_{mod},\mathbf{C})$ **) then**

$$T_{mod} := \infty;$$

    **else**

$$Q_{mod} := \text{sampleSmoothPath}(\Theta_{mod});$$

$$h_{mod} := \text{determineTimeIntervals}(Q_{mod});$$

$$T_{mod} := \sum_{k=1}^{N_s} h_{k,mod}$$

    **end if**

    **if (** $T_{mod} < T^*$ **) then**

$$T^* := T_{mod};$$

$$\Theta^* := \Theta_{mod};$$

$$\Delta\Theta_i := 1.2 \cdot \Delta\Theta_i; \qquad \text{// increase step size}$$

    **else**

$$\Delta\Theta_i := -0.5 \cdot \Delta\Theta_i; \quad \text{// decrease step size and invert direction}$$

    **end if**

**end for**

**until** (planning time is up ) or ($\Delta \Theta \leq \Delta \Theta_{min}$)

$N_S$ depicts the number of sample points, wherein $N_W$ depicts the number of waypoints.

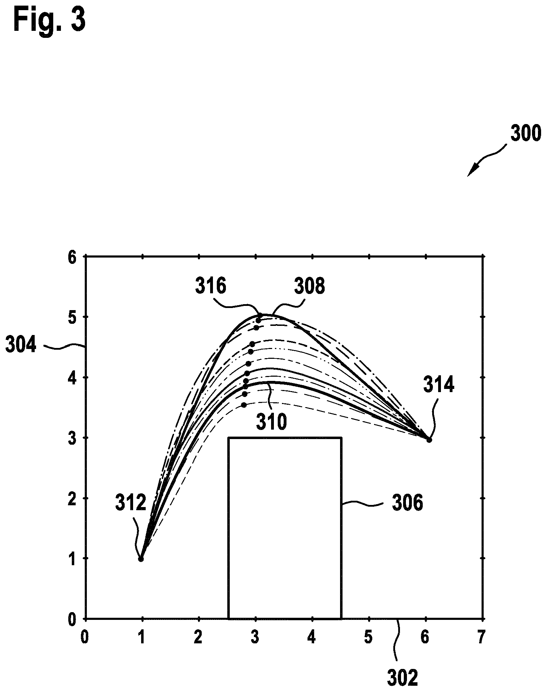

Figure 3 exemplarily shows in diagram 300 several different trajectories in a two-dimensional space, which are calculated by a method according to a preferred embodiment. The axis 302 exemplarily illustrates an x-axis 302 and the axis 304 a y-axis. The object 306 represents an obstacle, whose coordinates may be provided as a constraint, wherein the constraint might be that the trajectory may not collide with the obstacle or 306.

The optimization starts with the initial trajectory 308 defined by the initial waypoints and a spline generated extending through the waypoints 316, wherein also the starting point 312 and the target point 314 are considered as waypoints 316. As can be seen, this initial trajectory 308 is far from optimum, since it demands a long traveling path and in addition comprises a curve with a rather small radius of curvature, demanding a small velocity in order to limit the maximum acceleration in the curve. The time-optimized trajectory 310 indicates the final, optimized trajectory after the optimization process, which appears more advantageous than the initial trajectory 308, since it demands a shorter traveling distance and exhibits a larger radius of curvature allowing higher velocities. The other trajectories represent (preliminary) trajectories, which have been calculated or generated during the optimization process, but have been discarded after a better suitable trajectory has been found. All trajectories extend from the starting point 312 to the target point 314.

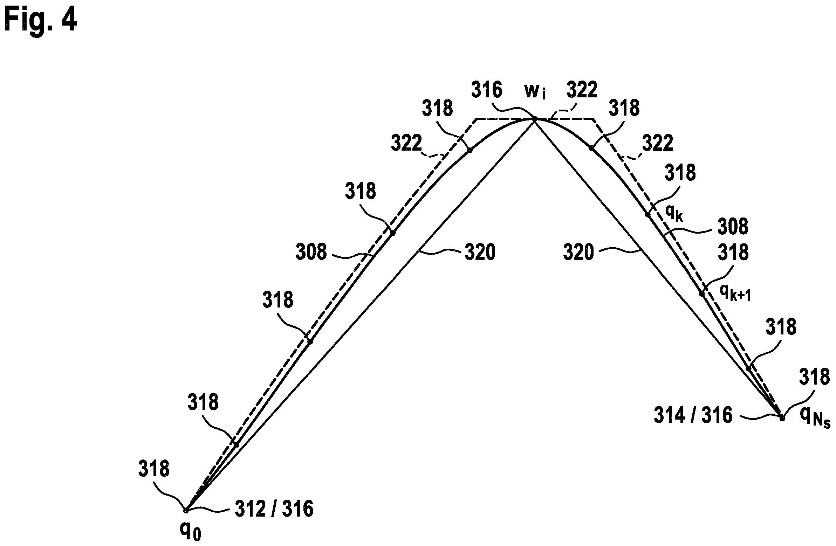

Figure 4 schematically depicts an exemplary time-optimized trajectory together with the initial waypoints 316 and several defined sample points 318. The starting point 312 and the target point 314 are also used and/or defined as waypoints 316. Furthermore, an additional waypoint 316 is generated between the starting point 312 and the target point 314, wherein the additional waypoint is denoted as $w_i$.

The calculated travelling times of the respective trajectories are calculated to be integer multiple of a predetermined control rate $T_s$, which may represent a minimum time interval of temporally quantized system. The traveling time along the initial trajectory 308 is calculated to be 606 times the control rate. In contrast, the time-optimized trajectory 310 requires a traveling time of only 512 times the control rate and, thus, can be travelled about 16% faster than the initial trajectory 308. The lines 320 indicate a simple form of an initial suggestion for a trajectory connecting the waypoints 316.

The initial trajectory 308 is generated as splines based on the waypoints 316 and connected at the waypoints 312. This spline is then sampled to retrieve the sample points 318, which are then interpolated to form a trajectory. Subsequently, the trajectory 308 may be optimized by varying the spline parameters to achieve a time-optimized trajectory 310. The number of sample points 318 may be larger than the number of waypoints 316. The time-optimized trajectory 310 and other trajectories emerging during the optimization process do not necessarily extend through the (initial) waypoints 312, except the starting point 312 and the target point 314.

The dashed lines indicate the tangents of the trajectory or spline at the waypoints 316.

**Claims**

1. Computer-implemented method for generating a trajectory (308) from a starting point (312) to a target point (314), the method comprising the steps:

    a) Determining at least one constraint, which the trajectory (308) is required to satisfy, wherein the at least one constraint comprises a maximum velocity and/or a maximum acceleration and/or a maximum jerk occurring when traveling along the trajectory, and/or wherein the at least one constraint comprises a position of at least one obstacle (306);
    b) Generating a set of initial waypoints (316) from the starting point (312) to the target point (314);
    c) Generating several splines based on associated spline parameters, wherein each of the splines extends between two adjacent waypoints (316) of the initial waypoints (316);
    d) Sampling the splines to generate sample points (318) and interpolating the sample points (318) to form a trajectory;
    e) Optimizing the trajectory (308) to a time-optimal trajectory (310), which satisfies the at least one constraint, by varying the spline parameters and comparing the required traveling time along the trajectory (310) after varying the spline parameters to the required traveling time before varying the spline parameters,

    **characterized in that** varying the spline parameters includes varying an angle of a tangent, wherein the tangent defines a direction in which the spline extends at the respective waypoint (316), wherein varying the splines includes a stepwise variation of the angle of the tangent of the respective splines in an iterative manner, wherein a step size of the stepwise variation is increased, if the preceding variation improved the trajectory and/or wherein a step direction is reversed and the step size is reduced, if the preceding variation impaired the trajectory.

2. Method according to claim 1, wherein the spline is a quintic Bezier spline.

3. Method according to any one of the preceding claims, wherein the at least one constraint comprises a position of at least one obstacle (306) and wherein the method, in step c) and/or step d), comprises checking for a collision of the trajectory (310) with the position of the at least one obstacle.

4. Method according to any one of the preceding claims, wherein the optimization of the trajectory to a time-optimal trajectory (310) is ended if the step size reaches or falls below a predetermined threshold step size and/or if a predetermined planning time elapsed.

5. Method according to any one of the preceding claims, wherein the optimizing of the trajectory (308) to a time-optimal trajectory (310) is performed by a resilient backpropagation (RPROP) optimization heuristic.

6. Processing unit configured to carry out a method according to any one of the preceding claims.

7. Control unit for a displacement device, comprising a processing unit according to claim 6.

8. Displacement device comprising a control unit according to claim 7.

9. Computer program configured to cause a processing unit carrying out a method according to any one of the claims 1 to 5.

10. Machine readable data storage medium having a computer program according to claim 9 stored thereon.


**Patentansprüche**

1. Computerimplementiertes Verfahren zum Erzeugen einer Bahn (308) von einem Startpunkt (312) zu einem Zielpunkt (314), wobei das Verfahren die folgenden Schritte umfasst:

a) Bestimmen mindestens einer Abhängigkeit, die die Bahn (308) erfüllen muss, wobei die mindestens eine Abhängigkeit eine Maximalgeschwindigkeit und/oder eine Maximalbeschleunigung und/oder einen Maximalruck, die während des Fahrens entlang der Bahn auftreten, umfasst und/oder wobei die mindestens eine Abhängigkeit eine Position mindestens eines Hindernisses (306) umfasst;
b) Erzeugen eines Satzes anfänglicher Wegpunkte (316) vom Startpunkt (312) zum Zielpunkt (314);
c) Erzeugen einiger "Splines" auf der Grundlage zugeordneter "Spline"-Parameter, wobei jeder der "Splines" zwischen zwei benachbarten Wegpunkten (316) der anfänglichen Wegpunkte (316) verläuft;
d) Abtasten der "Splines", um Abtastpunkte (318) zu erzeugen und Interpolieren der Abtastpunkte (318), um eine Bahn zu bilden; und
e) Optimieren der Bahn (308) zu einer zeitlich optimalen Bahn (310), die die mindestens eine Abhängigkeit erfüllt, durch Variieren der "Spline"-Parameter und Vergleichen der erforderlichen Fahrtzeit entlang der Bahn (310) nach dem Variieren der "Spline"-Parameter mit der erforderlichen Fahrtzeit vor dem Variieren der "Spline"-Parameter,
**dadurch gekennzeichnet, dass**
ein Variieren der "Spline"-Parameter ein Variieren eines Winkels einer Tangente enthält, wobei die Tangente eine Richtung definiert, in der der "Spline" beim entsprechenden Wegpunkt (316) verläuft, das Variieren der "Splines" eine schrittweise Variation des Winkels der Tangente der entsprechenden "Splines" in einer iterativen Weise enthält, eine Schrittweite der schrittweisen Variation erhöht wird, wenn die vorhergehende Variation die Bahn verbessert hat, und/oder eine Schrittrichtung umgekehrt wird und die Schrittweite verringert wird, wenn die vorhergehende Variation die Bahn verschlechtert hat.

2. Verfahren nach Anspruch 1, wobei der "Spline" ein quintischer Bezier-"Spline" ist.

**3.** Verfahren nach einem der vorhergehenden Ansprüche, wobei die mindestens eine Abhängigkeit eine Position mindestens eines Hindernisses (306) umfasst und das Verfahren in Schritt c) und/oder Schritt d) ein Prüfen umfasst, ob eine Kollision der Bahn (310) mit der Position des mindestens einen Hindernisses vorliegt.

**4.** Verfahren nach einem der vorhergehenden Ansprüche, wobei die Optimierung der Bahn zu einer zeitlich optimalen Bahn (310) beendet wird, wenn die Schrittweite eine vorgegebene Schwellenwertschrittweite erreicht oder darunter fällt und/oder eine vorgegebene Planungszeit verstrichen ist.

**5.** Verfahren nach einem der vorhergehenden Ansprüche, wobei das Optimieren der Bahn (308) zu einer zeitlich optimalen Bahn (310) durch eine widerstandsfähige Rückausbreitungsoptimierungsheuristik (RPROP-Optimierungsheuristik) durchgeführt wird.

**6.** Verarbeitungseinheit, die konfiguriert ist, ein Verfahren nach einem der vorhergehenden Ansprüche auszuführen.

**7.** Steuereinheit für eine Verlagerungsvorrichtung, die eine Verarbeitungseinheit nach Anspruch 6 umfasst.

**8.** Verlagerungsvorrichtung, die eine Steuereinheit nach Anspruch 7 umfasst.

**9.** Computerprogramm, das konfiguriert ist, zu bewirken, dass eine Verarbeitungseinheit ein Verfahren nach einem der Ansprüche 1 bis 5 ausführt.

**10.** Maschinenlesbares Datenspeichermedium, in dem ein Computerprogramm nach Anspruch 9 gespeichert ist.


**Revendications**

**1.** Procédé mis en œuvre sur ordinateur permettant de générer une trajectoire (308) depuis un point de départ (312) jusqu'à un point cible (314), le procédé comprenant les étapes suivantes :

   a) la détermination d'au moins une contrainte qu'il est demandé à la trajectoire (308) de satisfaire, la ou les contraintes comprenant une vitesse maximale et/ou une accélération maximale et/ou une saccade maximale se produisant lors du déplacement le long de la trajectoire, et/ou dans lequel la ou les contraintes comprennent la position d'au moins un obstacle (306),
   b) la génération d'un ensemble de points de passage (316) initiaux depuis le point de départ (312) jusqu'au point cible (314),
   c) la génération de plusieurs courbes fondées sur des paramètres associés de courbes, chacune des courbes s'étendant entre deux points de passage (316) adjacents parmi les points de passage (316) initiaux,
   d) l'échantillonnage des courbes pour générer des points d'échantillonnage (318), ainsi que l'interpolation des points d'échantillonnage (318) pour former une trajectoire,
   e) l'optimisation de la trajectoire (308) pour qu'elle devienne une trajectoire (310) optimale dans le temps qui satisfait la ou les contraintes en faisant varier les paramètres de courbes, et la comparaison du temps de trajet requis le long de la trajectoire (310), après avoir fait varier les paramètres de courbes, au temps de trajet requis avant la variation des paramètres de courbes,
   **caractérisé en ce que**
   la variation des paramètres de courbes inclut la variation de l'angle d'une tangente, la tangente définissant la direction dans laquelle s'étend la courbe au niveau du point de passage (316) respectif, la variation des courbes incluant une variation par pas de l'angle de la tangente des courbes respectives de manière itérative : la taille d'un pas de la variation par pas étant augmentée si la variation précédente a amélioré la trajectoire, et/ou la direction d'un pas étant inversée et la taille d'un pas étant réduite si la variation précédente a altéré la trajectoire.

**2.** Procédé selon la revendication 1, dans lequel la courbe est une courbe de Bézier quintique.

**3.** Procédé selon l'une quelconque des revendications précédentes, dans lequel la ou les contraintes comprennent la position d'au moins un obstacle (306), et dans lequel le procédé, à l'étape c) et/ou à l'étape d), comprend le contrôle d'une collision de la trajectoire (310) avec la position du ou des obstacles.

**4.** Procédé selon l'une quelconque des revendications précédentes, dans lequel l'optimisation de la trajectoire pour qu'elle devienne une trajectoire (310) optimale dans le temps se termine si la taille de pas atteint ou passe en dessous d'une taille de pas seuil prédéterminé et/ou si une durée de planification prédéterminée s'est écoulée.

5.  Procédé selon l'une quelconque des revendications précédentes, dans lequel l'optimisation de la trajectoire (308) pour qu'elle devienne une trajectoire (310) optimale dans le temps est effectuée par une heuristique d'optimisation de rétro-propagation résiliente.

6.  Unité de traitement configurée pour exécuter un procédé conforme à l'une quelconque des revendications précédentes.

7.  Unité de commande destinée à un dispositif de déplacement, comprenant une unité de traitement conforme à la revendication 6.

8.  Dispositif de déplacement comprenant une unité de commande conforme à la revendication 7.

9.  Programme informatique configuré pour amener une unité de traitement à exécuter un procédé conforme à l'une quelconque des revendications 1 à 5.

10. Support de stockage de données pouvant être lu par une machine comportant un programme informatique stocké conforme à la revendication 9.

# Fig. 1

# Fig. 2

200

202

204

214

214a

206

212

210

208

# Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160207658 A
- US 20170179806 A
- US 9685849 B2

**Non-patent literature cited in the description**

- Chomp: Covariant Hamiltonian optimization for motion planning. *The International Journal of Robotics Research,* 2013
- **X. LU ; Y. ZHAO ; C. WANG ; M. TOMIZUKA.** Trajectory planning for robot manipulators considering kinematic constraints using probabilistic roadmap approach. *Journal of Dynamic Systems, Measurement, and Control,* 2017
- Trajectory Planning Robotics. **ALESSANDRO GASPARETTO et al.** MATHEMATICS IN COMPUTER SCIENCE. SP BIRKHA USER VERLAG BASEL
- **BILL CASSELMANN.** Feature Column from the American Mathematical Society. *From Bezier to Bernstein*
- **BOEHM et al.** ON DE CASTELJAUS ALGORITHM. *COMPUTER AIDED GEOMETRIC DESIGN*
- **CHRISTIAN IGEL ; MICHAEL HUSKEN.** Improving the Rprop Learning Algorithm. *Proceedings of the Second ICSC International Symposium on Neural Computation*